# EUROPÄISCHE PATENTSCHRIFT

(11) **EP 3 020 107 B1**
(45) Veröffentlichungstag und Bekanntmachung des Hinweises auf die Patenterteilung: **23.08.2017**
(21) Anmeldenummer: 14733992.3
(22) Anmeldetag: 14.06.2014
(51) Int. Cl.: H02G 3/32, F03D 13/00

(54) **EINRICHTUNG ZUR FIXIERUNG UND/ODER FÜHRUNG VON STRANGFÖRMIGEN ELEMENTEN**
DEVICE FOR FIXING AND/OR GUIDING STRAND-SHAPED ELEMENTS
SYSTÈME DE FIXATION ET/OU DE GUIDAGE D'ÉLÉMENTS EN FORME DE BOUDINS

(30) Priorität: 28.06.2013 DE 102013010821
(43) Veröffentlichungstag der Anmeldung: 18.05.2016
(73) Patentinhaber: HYDAC Accessories GmbH, 66280 Sulzbach/Saar (DE)
(72) Erfinder: SCHMITT, Martin, 66917 Knopp-Labach (DE); CASPARI, Jochen, 66606 St. Wendel (DE)
(74) Vertreter: Bartels, Martin Erich Arthur
(86) Internationale Anmeldenummer: PCT/EP2014/001617
(87) Internationale Veröffentlichungsnummer: WO 2014/206536

(56) Entgegenhaltungen:
- EP-A1- 2 492 563
- EP-A2- 2 482 401
- DE-A1-102010 032 686
- DE-A1-102010 032 687
- DE-A1-102011 012 391

## Beschreibung

Die Erfindung betrifft eine Einrichtung zur Fixierung und/oder Führung von strangförmigen Elementen, insbesondere von Kabeln oder Kabelbündeln bei Windkraftanlagen, mit den Merkmalen im Oberbegriff von Anspruch 1.

Um die in Windkraftanlagen erzeugten Energien abzuführen sowie für andere betriebliche Zwecke, wie Steuerung, Überwachung und dergleichen, sind Kabel und Leitungen, die durch den Turm ins Maschinenhaus führen, über Trägerstrukturen im Turm, insbesondere an den Turmsegmenten, zuverlässig festzulegen. Als diesbezüglicher Stand der Technik ist in dem Dokument DE 10 2011 012 391 A1 eine Einrichtung der eingangs genannten Gattung offenbart. Bei dieser bekannten Einrichtung sind zur Bildung eines Befestigungssystems Haltekörper, die Aufnahmeräume zum Einlegen betreffender Strangelemente bilden, in einer entlang eines Kreisbogens verlaufenden Aufeinanderfolge an einer Trägerstruktur derart anbringbar, dass die Öffnungen der Aufnahmeräume radial außen gelegen sind. Für das Schließen der Öffnungen der Aufnahmeräume ist eine Abdeckeinrichtung vorgesehen, die an einem Rand der Öffnung des Aufnahmeraums angelenkt und in eine definierte Schließstellung schwenkbar ist, in der sie die Öffnung des Aufnahmeraums überdeckt. Die Abdeckeinrichtung weist ein Oberteil und ein relativ zu diesem bewegbares Andrückteil auf. Dieses ist durch ein zwischen ihm und dem Oberteil eingespanntes Federpaket für eine vom Oberteil weg gerichtete Bewegung vorgespannt, um auf in den Aufnahmeraum eingelegte, jeweilige Strangelemente eine Spannkraft innerhalb eines Spannbereichs zu übertragen. Dieser Spannbereich ist durch Anschläge, die den für das Andrückteil zur Verfügung stehenden Hubweg begrenzen, festgelegt.

Für eine optimale Fixierung und/oder Führung eingelegter Strangelemente ist es wesentlich, dass die Anlage des Andrückteils am betreffenden, eingelegten Strangelement innerhalb des Spannbereichs erfolgt, in dem das Andrückteil bewegbar ist. Mit anderen Worten gesagt, sollte die lichte Höhe und Weite des durch das Andrückteil nach außen hin begrenzten Aufnahmeraums den Abmessungen eingelegter Strangelemente oder Strang- oder Leitungsbündel entsprechen. Wenn unterschiedliche Arten, Formen und Größen von Strangelementen oder-bündeln in Frage kommen, können entsprechend unterschiedlich gestaltete Haltekörper mit entsprechend unterschiedlichen Größen der Aufnahmeräume zum Einsatz kommen.

Die EP 2 492 563 A1 beschreibt eine Einrichtung zur Fixierung und/oder Führung von strangförmigen Elementen mit mindestens einem zur Bildung eines modularen Befestigungssystems mit einer Trägerstruktur kombinierbaren Haltekörper, der einen Aufnahmeraum bildet, der für das Einlegen mindestens eines Strangelements eine Öffnung aufweist, die durch eine Abdeckeinrichtung verschließbar ist, die ein Andrückteil aufweist, mittels dessen in einem Spannbereich eine Haltekraft auf im Aufnahmeraum befindliche Strangelemente ausübbar ist, wobei für eine Anpassung der Lage des Spannbereichs des Andrückteils an unterschiedliche Abmessungen eingelegter Strangelemente eine Rasteinrichtung vorhanden ist, mittels deren die Abdeckeinrichtung mit dem Haltekörper wahlweise in Positionen verrastbar ist, die dem Zentralbereich des Aufnahmeraumes mehr oder weniger stark angenähert sind, wobei der Haltekörper einen Aufnahmeraum in Form einer Mulde bildet, und wobei die Rasteinrichtung an den beiden einander zugewandten Innenseiten des Randes der Öffnung der Mulde eine sich in Richtung der Tiefe der Mulde erstreckende Folge von Rastkerben und an den dem Rand der Öffnung zugekehrten Seiten der Abdeckeinrichtung jeweils eine Rastnase aufweist. Der Haltekörper und die Abdeckeinrichtung sind im Auslieferungszustand durch ein trennbares Filmgelenk miteinander verbunden.

Weitere Einrichtungen zur Fixierung und/oder Führung von strangförmigen Elementen gehen aus der DE 10 2010 032 687 A1, der EP 2 482 401 A2 und der DE 10 2010 032 686 A1 hervor.

Ausgehend von diesem Stand der Technik stellt sich die Erfindung die Aufgabe, eine Fixierungs- und/oder Führungseinrichtung zur Verfügung zu stellen, die mit besonderem Vorteil für den Einsatz bei Strangelementen unterschiedlicher Arten und Größen geeignet ist.

Erfindungsgemäß ist diese Aufgabe durch eine Einrichtung gelöst, die die Merkmale des Patentanspruchs 1 in seiner Gesamtheit aufweist.

Nach dem kennzeichnenden Teil des Anspruchs 1 besteht eine wesentliche Besonderheit der Erfindung darin, dass die Abdeckeinrichtung am Haltekörper für Schwenkbewegungen zwischen die Öffnung freigebenden und die Öffnung verschließenden Stellungen über eine Schwenklagerung angebracht ist, die mittels Langlöchern eine Verlagerung der Schwenkachse und damit einen Verschiebeweg für die Positionseinstellung der Abdeckeinrichtung entlang der Folge der Rastkerben der Rasteinrichtung zur Verfügung stellt.

Es ist vorgesehen, dass für eine Anpassung der Lage des Spannbereichs des Andrückteils an unterschiedliche Abmessungen eingelegter Strangelemente eine Rasteinrichtung vorhanden ist, mittels deren die Abdeckeinrichtung mit dem Haltekörper wahlweise in Positionen verrastbar ist, die dem Zentralbereich des Aufnahmeraums mehr oder weniger stark angenähert sind. Dadurch, dass die Abdeckeinrichtung relativ zum Aufnahmeraum in wählbarer Position festlegbar ist, lässt sich bei gleicher Form und Abmessung der Aufnahmeräume erreichen, dass ungeachtet der Größe eines Strangelements oder mehrerer in den Aufnahmeraum eingelegter Strangelemente oder -bündel das Andrückteil innerhalb des ihm zur Verfügung stehenden Spannbereichs zur Übertragung der Spannkraft zur Anlage gelangt. Dadurch eröffnet sich die vorteilhafte Möglichkeit, die Haltekörper in Form rationell herstellbarer Gleichteile zum Einsatz zu bringen, ungeachtet dessen, ob unterschiedliche Arten und/oder Größen von Strangelementen in Frage kommen.

Der Haltekörper bildet einen Aufnahmeraum in Form einer Mulde, wobei die Rasteinrichtung an den beiden einander zugewandten Innenseiten des Randes der Öffnung der Mulde eine sich in Richtung der Tiefe der Mulde erstreckende Folge von Rastkerben und an den dem Rand der Öffnung zugekehrten Seiten der Abdeckeinrichtung jeweils eine Rastnase aufweist. Bei derartiger symmetrischer Gestaltung des Haltekörpers mit beidseits an der Seite des Öffnungsrandes gebildeten Rastkerben und entsprechend symmetrischer Gestaltung der Abdeckeinrichtung mit beidseits außenliegender Rastnase lässt sich beim Montagevorgang die Abdeckeinrichtung in Richtung auf die Tiefe der Mulde bis zu einer Rastposition eindrücken, bei der das Andrückteil innerhalb seines Spannbereichs an einem eingelegten Strangelement oder -bündel anliegt. Der symmetrische Aufbau führt zur Erleichterung der Montage, weil nicht auf die gegenseitige Orientierung von Haltekörper und Abdeckeinrichtung geachtet werden muss.

Mit Vorteil kann die Anordnung so getroffen sein, dass zur Bildung der Schwenklagerung an beiden Rändern der Öffnung des Aufnahmeraums vorstehende Ansätze vorgesehen sind, an deren einander zugewandten Innenseite jeweils eine Folge der Rastkerben ausgebildet ist. Bei dieser symmetrischen Gestaltung ist nach Wahl einer der beiden Ansätze für die Bildung der eigentlichen Schwenklagerung nutzbar, während der andere vorstehende Ansatz für eine Führungsfunktion für die Positionsverschiebung der in Schließstellung befindlichen Abdeckeinrichtung nutzbar ist.

Bei besonders vorteilhaften Ausführungsbeispielen, bei denen die Abdeckeinrichtung ein Oberteil aufweist, an dem das Andrückteil über den Spannbereich beweglich gelagert ist, das beidseits jeweils zwei vorstehende Lagerteile aufweist, die die Ansätze an der Öffnung des Aufnahmeraums übergreifen, sind die Langlöcher der Schwenklagerung in den Lagerteilen ausgebildet.

Hinsichtlich der an der Abdeckeinrichtung befindlichen Rastnasen der Rasteinrichtung kann die Anordnung mit Vorteil so getroffen sein, dass eine Rastnase an je einer flexiblen Zunge gebildet ist, die am Oberteil der Abdeckeinrichtung zwischen den Lagerteilen angeformt sind. Die zwischen den Lagerteilen befindlichen Zungen können für ein Lösen der Verrastung eine von außen zugängliche Öffnungslasche bilden. Gleichzeitig sind die Zungen durch ihre Anordnung zwischen den Lagerteilen gegen Beschädigung und unbeabsichtigtes Lösen der Verrastung geschützt.

Bei besonders vorteilhaften Ausführungsbeispielen sind an den der Schwenklagerung zugehörigen Ansätzen des Haltekörpers im Abstand von einer die Schwenkachse definierenden Bohrung Auswölbungen gebildet, die mit den Langlöchern der Lagerteile des Oberteils der Abdeckeinrichtung bei deren Offenstellung in Rasteingriff kommen. Dadurch ist für ein bequemes Einlegen von Strangelementen in die Aufnahmeräume die jeweilige Abdeckeinrichtung in einer Offenstellung lösbar verrastbar.

Für eine Modifizierung der Oberflächenbeschaffenheit der Aufnahmeräume können schalenförmige, die Wand des jeweiligen Aufnahmeraums bildende Einsätze vorgesehen sein, die auswechselbar im Haltekörper festlegbar sind. Durch an der Innenseite glattflächige Einsätze, oder versehen mit einer Rippenstruktur, lassen sich die Aufnahmeräume an die jeweiligen Gegebenheiten anpassen, beispielsweise um einen schonenden Kontakt mit empfindlichen Strangelementen oder eine gewünschte Halte- oder Führungswirkung zu erreichen. Auch können derartige Einsätze aus verschiedenen Werkstoffen mit gewünschten Oberflächeneigenschaften gefertigt sein.

Hinsichtlich der Anbringung der Haltekörper an einer zugeordneten Trägerstruktur kann die Anordnung mit Vorteil so getroffen sein, dass der jeweilige Haltekörper beidseits der Aufnahmeräume an seiner Außenseite vertiefte Bereiche aufweist, die je einen Kanal bilden, mit dem der Haltekörper auf Arme aufschiebbar ist, die in Abständen voneinander an einer Trägerstruktur angeordnet sind. In der Art eines modularen Baukastensystems lassen sich dadurch an die jeweiligen Gegebenheiten angepasste Befestigungssysteme ausbilden, beispielsweise mit Trägerstrukturen, bei denen sich die Arme in Abständen voneinander von einem kreisbogenförmigen Grundkörper derart weg erstrecken, dass zwischen benachbarten Armen jeweils ein Haltekörper aufnehmbar ist, indem der Haltekörper mit den seitlichen Kanälen auf die betreffenden Arme aufschiebbar ist.

In besonders vorteilhafter Weise kann zwischen den Kanälen und den Armen der Trägerstruktur eine Verrastung zum Festlegen des auf die Arme aufgeschobenen Haltekörpers ausgebildet sein.

Hinsichtlich der Gestaltung der Abdeckeinrichtung kann die Anordnung mit Vorteil so getroffen sein, dass das Andrückteil am Oberteil der Abdeckeinrichtung längs einer Führung bewegbar ist, die die Länge des Spannbereichs des Andrückteils begrenzt, wobei das Andrückteil durch eine Federanordnung für eine vom Oberteil weg gerichtete Bewegung vorgespannt ist.

Gemäß dem Patentanspruch 13 ist Gegenstand der Erfindung auch ein modulares Befestigungssystem, das zumindest eine Einrichtung nach einem der Ansprüche 1 bis 12 aufweist und bei dem eine Trägerstruktur mit im Abstand voneinander verlaufenden Armen vorgesehen ist, zwischen denen ein jeweiliger Haltekörper aufnehmbar und mittels Festlegemitteln an der Trägerstruktur fixierbar ist.

In besonders vorteilhafter Weise kann hierbei die Trägerstruktur in Form eines Sternkörpers ausgebildet sein, an dem von einem Zentralbereich sich nach außen erstreckende Arme vorgesehen sind. Um eine stabile, kurzschlussfeste Trägerstruktur zu realisieren, kann ein derartiger Sternkörper vorzugsweise aus einem metallischen Werkstoff gefertigt sein. Eine gewichtsoptimierte Trägerstruktur lässt sich auf rationelle Weise beispielsweise durch Laserschneiden aus einer metallischen Platte herstellen.

Für die Lagesicherung der Haltekörper an der Trägerstruktur können die Arme an ihrer einem benachbarten Arm zugewandten Seite eine Vertiefung für den Eingriff eines eine fixierende Verrastung bildenden Vorsprungs des Haltekörpers aufweisen.

Nachstehend ist die Erfindung anhand der Zeichnung im Einzelnen erläutert. Es zeigen:
- Fig. 1: ein Ausführungsbeispiel eines Befestigungssystems, versehen mit erfindungsgemäßen Einrichtungen zur Fixierung und/oder Führung von Strangelementen, dargestellt in Draufsicht und ohne eingelegte Strangelemente;
- Fig. 2: in perspektivischer Schrägansicht eine gesonderte Darstellung der Trägerstruktur des Befestigungssystems von Fig. 1, ohne zugehörige, erfindungsgemäße Einrichtungen;
- Fig. 3: in gegenüber Fig. 1 vergrößertem Maßstab einen Teilbereich des Befestigungssystems, wobei lediglich zwei längs einer Horizontalebene geschnittene, erfindungsgemäße Einrichtungen in Kombination mit der Trägerstruktur sichtbar sind;
- Fig. 4: eine perspektivische Schrägansicht eines Ausführungsbeispiels der erfindungsgemäßen Einrichtung, wobei die Offenstellung des Aufnahmeraums des Haltekörpers gezeigt ist;
- Fig. 5: eine perspektivische Schrägansicht, in der der Haltekörper gesondert und ohne zugehörige Abdeckeinrichtung gezeigt ist;
- Fig. 6: eine der Fig. 5 ähnliche perspektivische Schrägansicht, wobei die zugehörige Abdeckeinrichtung in einer Übergangsstellung vor Erreichen einer Funktionsstellung gezeigt ist;
- Fig. 7: eine Vorderansicht des Ausführungsbeispiels, wobei, abweichend von Fig. 6, die Abdeckeinrichtung in der Funktionsstellung gezeigt ist;
- Fig. 8 und 9: perspektivische Schrägansichten zweier Ausführungsformen eines schalenförmigen Einsatzes, der zur Bildung einer Wandauskleidung im Aufnahmeraum eines betreffenden Haltekörpers aufnehmbar ist;
- Fig. 10: einen Horizontalschnitt des Ausführungsbeispiels, wobei die Abdeckeinrichtung in Entsprechung zu Fig. 6 in der Übergangsstellung gezeigt ist;
- Fig. 11: eine gegenüber Fig. 10 in etwas kleinerem Maßstab gezeichnete Draufsicht des Ausführungsbeispiels, wobei die Abdeckeinrichtung in einer gegenüber Fig. 10 geänderten Schnittebene geschnitten dargestellt ist; und
- Fig. 12: einen Horizontalschnitt der gesondert dargestellten Abdeckeinrichtung mit gegenüber Fig. 10 und 11 weiter verlagerter Schnittebene.

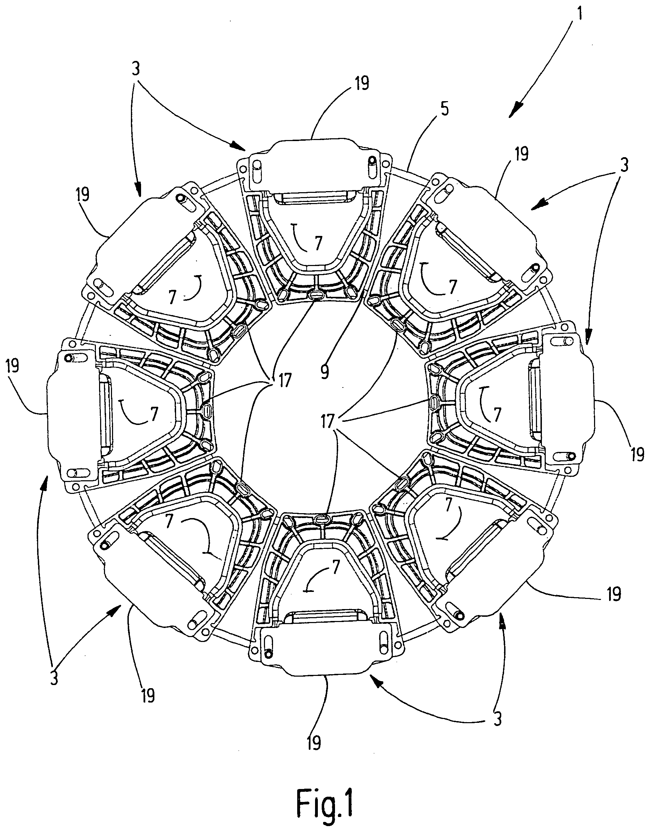

Die Fig. 1 zeigt ein als Ganzes mit 1 bezeichnetes modulares Befestigungssystem, das acht zum Führen und/oder Fixieren von strangförmigen Elementen vorgesehene Einrichtungen 3 enthält, die gemäß einem Ausführungsbeispiel der Erfindung ausgebildet sind. Die Einrichtungen 3 sind an einer Trägerstruktur 5 in der Art eines Sternkörpers entlang einer gedachten Kreislinie aufeinanderfolgend angeordnet. In Fig. 1 wie auch in den weiteren Figuren sind die Einrichtungen 3 jeweils ohne in Aufnahmeräume 7 eingelegte Strangelemente dargestellt.

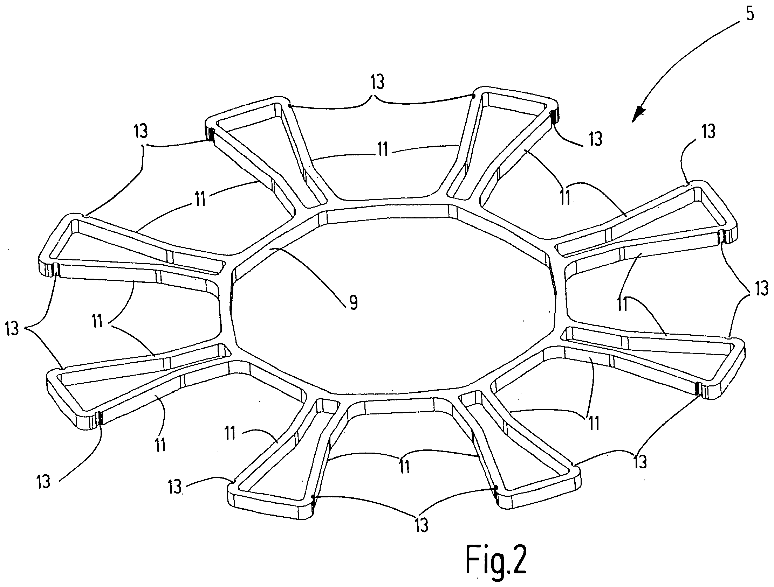

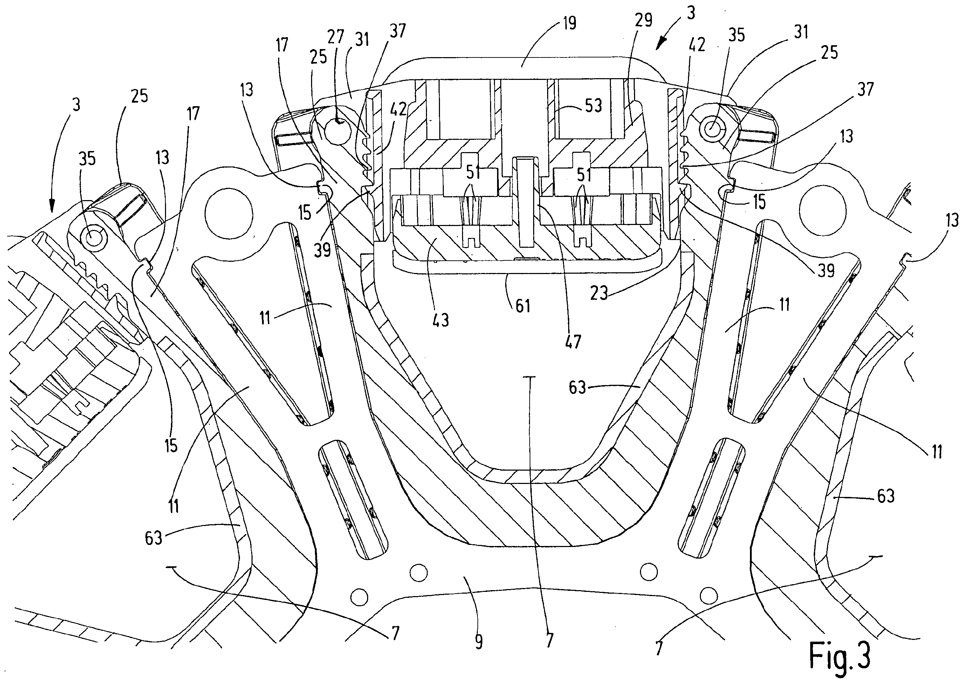

Die Fig. 2 zeigt in gesonderter Darstellung die Trägerstruktur 5. Diese weist von einem unrunden Innenring 9, der einen Oktaeder beschreibt, ausgehende Arme 11 auf, zwischen denen jeweils eine der Einrichtungen 3 aufnehmbar ist. In der Nähe des äußeren Endes jedes der Arme 11 ist an der dem jeweils benachbarten Arm 11 zugewandten Seite eine Vertiefung 13 ausgebildet, die für eine Verriegelung einer zwischen die Arme 11 eingesetzten Einrichtung 3 durch Eingriff einer an dieser befindlichen Nase 15 vorgesehen ist. Dieser Verriegelungseingriff ist aus der vergrößerten Darstellung von Fig. 3 ersichtlich. Bei der Trägerstruktur 5 kann es sich um ein Spritzgussteil handeln, vorzugsweise aus metallischem Werkstoff. Aus einer Metallplatte kann die Trägerstruktur 5 auch durch Laserschneiden rationell gefertigt sein. Es versteht sich, dass anstelle eines Sternkörpers, bei dem die Einrichtungen 3 entlang eines geschlossenen Ringes angeordnet sind, auch ein anders geformter Körper, beispielsweise in halbmondartiger Form, vorgesehen sein kann, wobei die Einrichtungen lediglich entlang eines Teilkreises angeordnet sind. Ebenso könnte eine leistenartige Trägerstruktur vorgesehen sein, mit in gerader Linie angeordneten Einrichtungen 3.

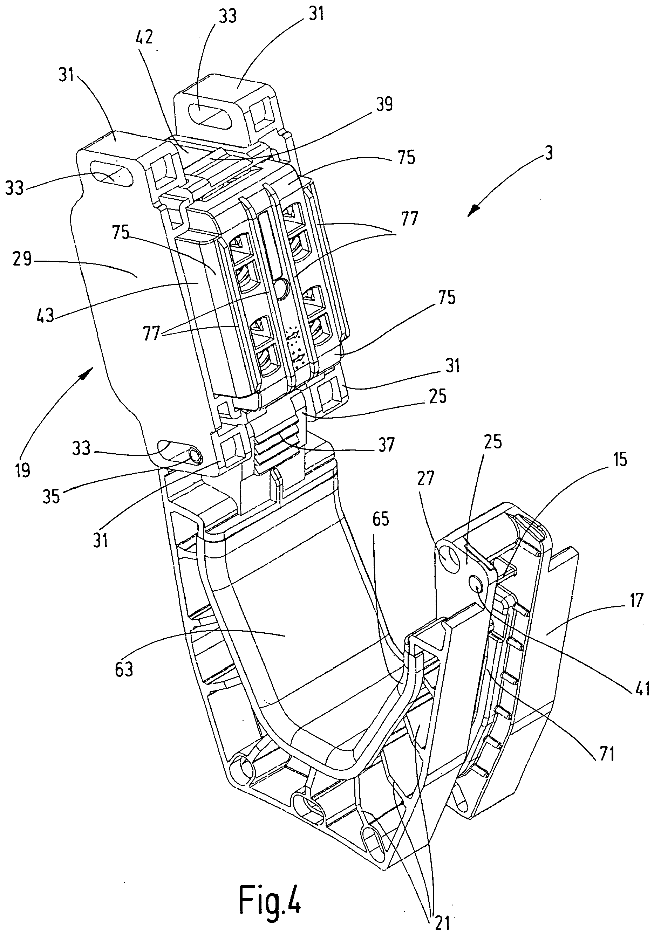

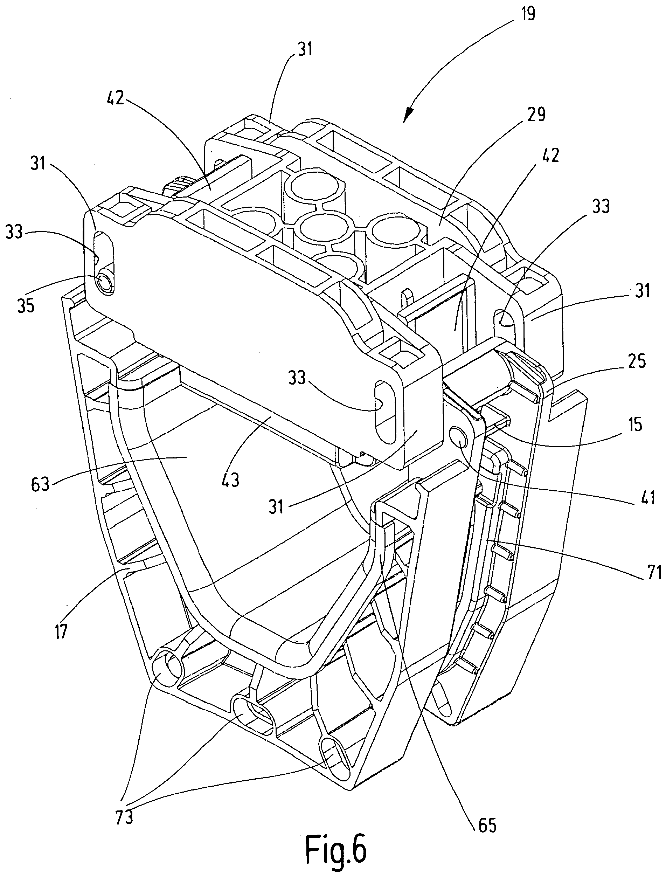

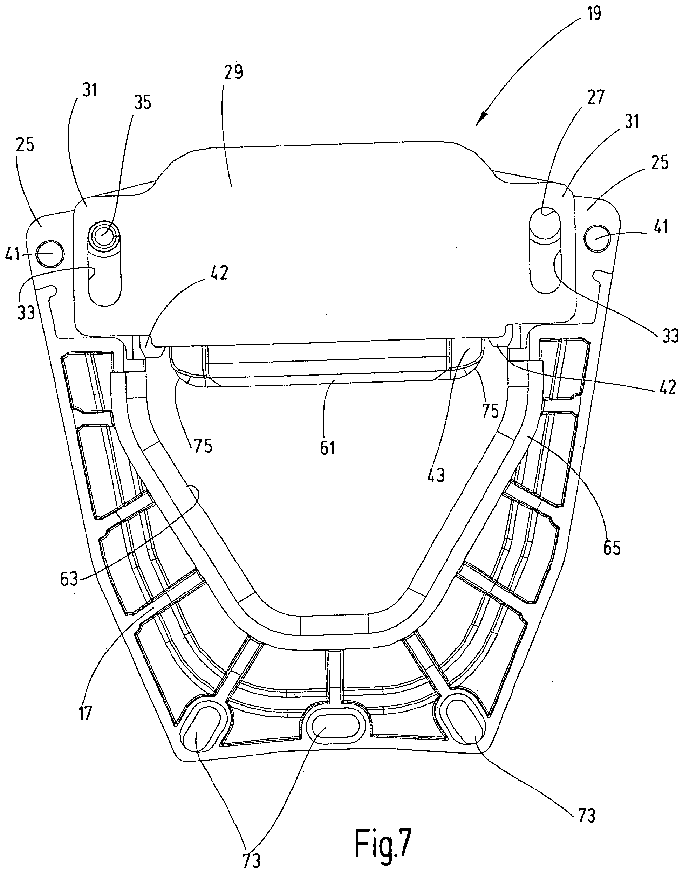

Nähere Einzelheiten eines Ausführungsbeispiels der Einrichtungen 3 sind den folgenden Figuren deutlicher entnehmbar. Die Fig. 4 zeigt in gesonderter Darstellung eine Einrichtung 3 mit einem Haltekörper 17, der den muldenförmigen Aufnahmeraum 7 für einzulegende Strangelemente bildet, die nicht dargestellt sind. Die in den Figuren obenliegende Öffnung 23 des Aufnahmeraums 7 ist mittels einer Abdeckeinrichtung 19 verschließbar, die in Fig. 4 in eine Offenstellung geschwenkt dargestellt ist. Der Haltekörper 17 ist aus Kunststoff spritzgeformt und weist eine Rippenstruktur (von der in Fig. 4 lediglich einige Rippen mit 21 beziffert sind) für eine Material- und Gewichtseinsparung gegenüber einem Vollkörper auf. An beiden Rändern der oberen Öffnung 23 (siehe Fig. 3) des Aufnahmeraums 7 erstrecken sich mittig gelegene Ansätze 25 nach oben. Wie am deutlichsten den Fig. 4 und 6 entnehmbar ist, definiert einer der Ansätze 25 mit seiner Bohrung 27 die Schwenkachse für die am Haltekörper 17 angelenkte Abdeckeinrichtung 19. Letztere weist an ihrem Oberteil 29 zu beiden Seiten ein Paar vorspringender Lagerteile 31 auf, die bei der Schließstellung der Abdeckeinrichtung 19, wie sie in Fig. 3, 6, 7, 10 und 11 dargestellt ist, die Ansätze 25 übergreifen, wobei die passend übergriffenen Ansätze 25 eine seitliche Führung für die Abdeckeinrichtung 19 bilden. In den Lagerteilen 31 sind Langlöcher 33 ausgebildet. Die Langlöcher 33 an einer Seite des Oberteils 29 bilden zusammen mit einem Lagerbolzen 35 die Schwenklagerung für die Abdeckeinrichtung 19, wobei die Schwenklagerung aufgrund der Länge der Langlöcher 33 eine Verschiebebewegung der Abdeckeinrichtung 19 aus der in Fig. 6 gezeigten Übergangsstellung zu einer an den Grund des muldenartigen Aufnahmeraums 7 stärker angenäherte Stellung ermöglicht, wie sie in Fig. 7 dargestellt ist.

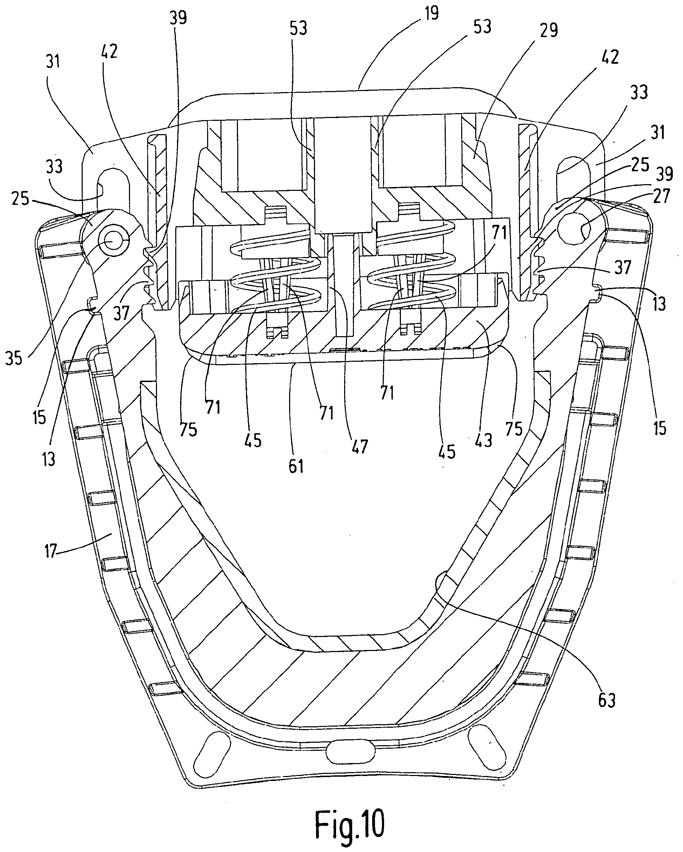

Um die Abdeckeinrichtung 19 in einer gewünschten Funktionsposition festzulegen, wie sie beispielsweise in Fig. 3 und Fig. 7 dargestellt ist, ist an jedem der seitlichen Ansätze 25 des Haltekörpers 17 eine Aufeinanderfolge von Rastkerben 37 ausgebildet, wobei sich die Aufeinanderfolge in Richtung auf die Tiefe des muldenartigen Aufnahmeraums 7 erstreckt. Für die Zusammenwirkung mit diesen Rastkerben 37 ist an jeder Seite des Oberteils 29 der Abdeckeinrichtung 19 je eine Rastnase 39 vorgesehen. Diese Rastnasen 39 befinden sich an einer Zunge 42, die am Oberteil 29 der Abdeckeinrichtung 19 zwischen den Lagerteilen 31 derart angeformt ist, dass die jeweilige Zunge 42 eine flexible Öffnungslasche bildet, mittels deren die Verrastung manuell lösbar ist. Dadurch, dass die Zungen 42 zwischen den Lagerteilen 31 angeordnet sind, ist ein Schutz gegen Beschädigung und gegen unbeabsichtigtes Lösen gebildet. Die beidseits an der Öffnung 23 des Aufnahmeraums 7 durch die Rastkerben 37 und die Nasen 39 gebildete Verrastung ermöglicht es in Zusammenwirkung mit der durch die Langlöcher 33 gebildeten Verschiebbarkeit der Schwenklagerung, dass die Abdeckeinrichtung 19 in gewählten Funktionspositionen relativ zum Haltekörper 17 festlegbar ist. So kann die Abdeckeinrichtung 19 aus der in Fig. 6 und 10 gezeigten Übergangsposition in nach unten versetzten Funktionspositionen verrastet werden, beispielsweise in eine Position, wie sie in Fig. 3 und 7 angedeutet ist.

Um die in eine Offenstellung geschwenkte Abdeckeinrichtung 19, wie es in Fig. 4 gezeigt ist, lösbar zu sichern, sind an beiden Seiten der Ansätze 25 des Haltekörpers 17 jeweils eine Auswölbung 41 gebildet, die von der Schwenklagerbohrung 27 in einem solchen Abstand angeordnet sind, dass sie bei der Offenstellung (Fig. 4) in Zusammenwirkung mit einem betreffenden Langloch 33 einen Rastpunkt bilden, um die Abdeckeinrichtung 19 in der Offenstellung lösbar zu verrasten.

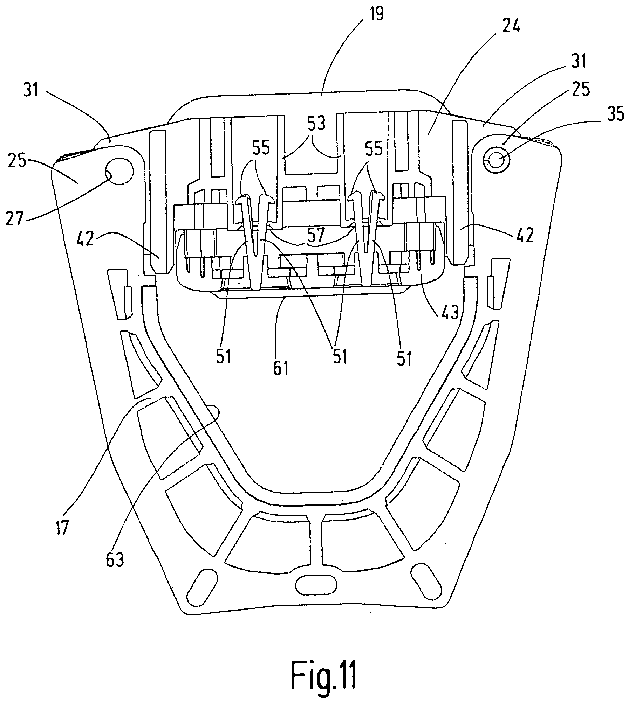

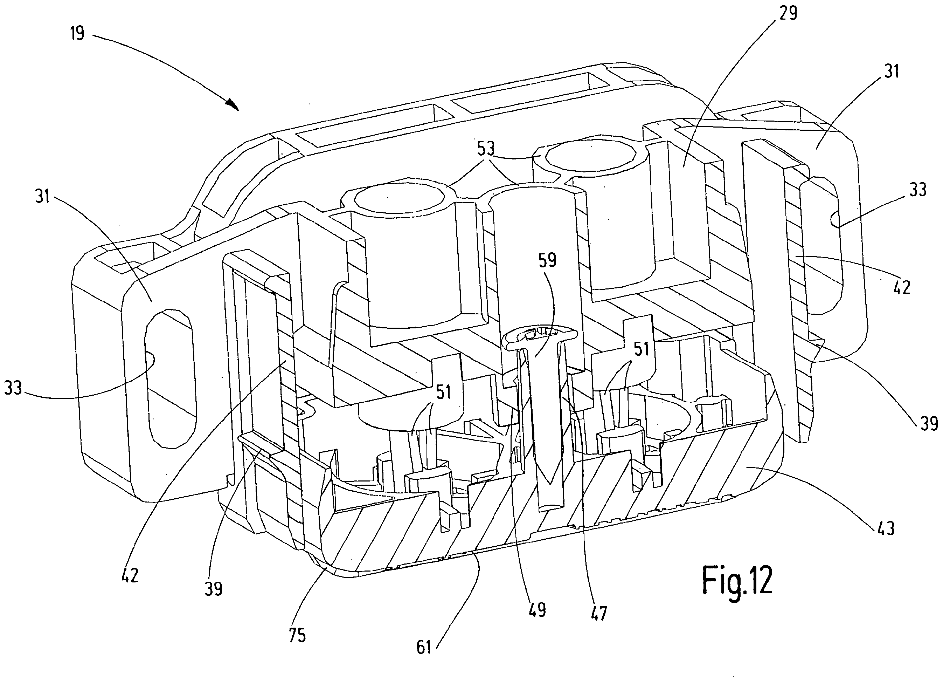

Wie am deutlichsten den Fig. 3 und 10 bis 12 entnehmbar ist, weist die Abdeckeinrichtung 19 für die Übertragung einer Spannkraft auf in den Aufnahmeraum 7 eingelegte Strangelemente ein Andrückteil 43 auf, das am Oberteil 29 für eine innerhalb eines Spannbereichs erfolgende Spannbewegung vertikal, d.h. in Richtung auf den Grund des Aufnahmeraums 7 hin, bewegbar angeordnet ist, wobei das Andrückteil 43 für eine derartige Spannbewegung mittels einer Federanordnung die Federpakete 45 (Fig. 10) aufweist, vorgespannt ist. Wie Fig. 12 zeigt, ist das Andrückteil 43 für den Hub der Spannbewegung mittels eines stutzenartigen Führungsteils 47 in einer Hülse 49 am Boden eines Zylinders 53 im Oberteil 29 geführt. Um den durch das Federpaket 45 bewirkten Hub auf einen Spannbereich zu begrenzen, sind Anschlageinrichtungen in Form flexibler, am Andrückteil 43 angeformte Laschen 51 vorgesehen, die, siehe Fig. 11, in Zylindern 53 des Oberteils 29 geführt sind und mit ihren endseitigen Anschlagnasen 55 bei Anlage am Rand einer bodenseitigen Öffnung 57 der Zylinder 53 den Hubweg begrenzen. Für eine zusätzliche Bruch- und Verliersicherung kann das Andrückteil 43 zusätzlich mittels einer in die Hülse 47 eingesetzten Schraube 59 gesichert sein. Die als Berührungsfläche für eingelegte Strangelemente vorgesehene Unterseite 61 des Andrückteils 43 kann eine glattflächige Oberfläche oder eine konturierte Oberfläche in Abhängigkeit von der Art der in Frage kommenden Spannelemente besitzen.

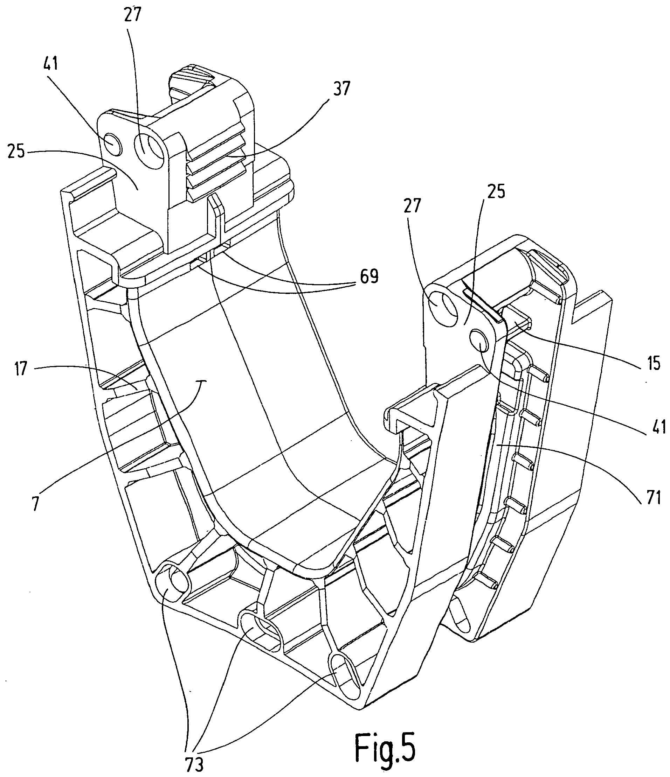

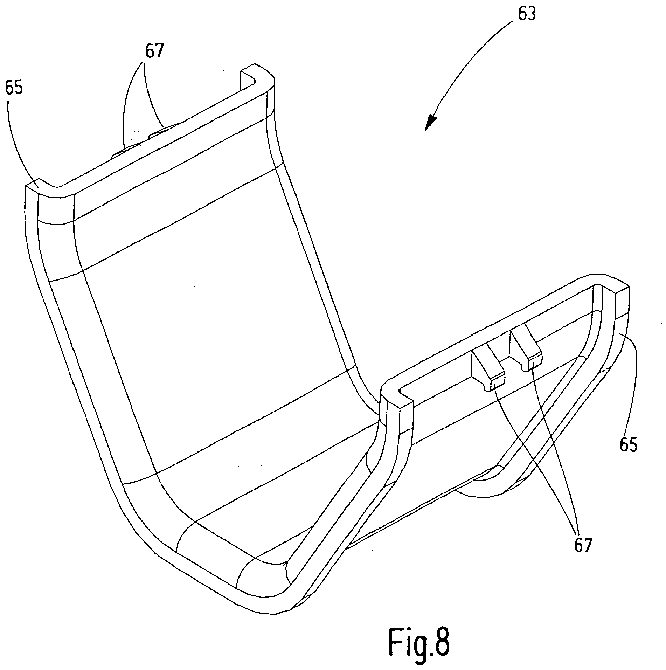

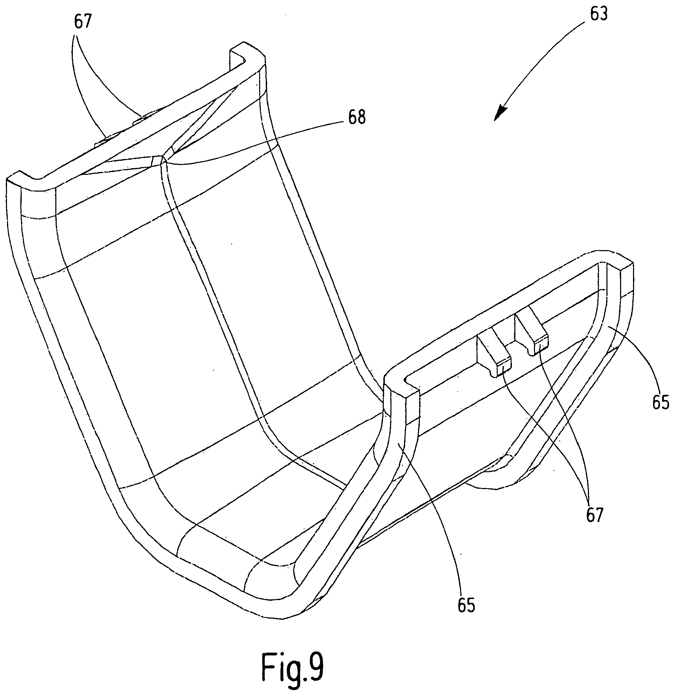

Für die Anpassung der Oberflächenbeschaffenheit der Aufnahmeräume 7 an unterschiedliche Arten von in Frage kommenden Strangelementen kann die Wand des Aufnahmeraums 7 nach Wunsch mit einer für den jeweiligen Einsatzzweck besonders geeigneten Auskleidung versehen sein. Beim vorliegenden Beispiel sind zu diesem Zweck schalenförmige, die Wand des jeweiligen Aufnahmeraums 7 bildende Einsätze 63 in Form von Schalen vorgesehen, die auswechselbar im Haltekörper 17 festlegbar sind. Die Fig. 8 und 9 zeigen in gesonderter Darstellung jeweils eine Ausführungsform eines Einsatzes 63. Wie ersichtlich, entspricht die Form des Einsatzes 63 der Form der Mulde im Haltekörper 17, wobei seitlich abgebogene Ränder 65 bei in den Haltekörper 17 eingesetzter Position den Muldenrand übergreifen. Zur lösbaren Sicherung der Einsätze 63 sind im oberen Bereich der Außenseite Rasthaken 67 angeformt, die in Ausnehmungen 69, siehe Fig. 5, in der Mulde des Haltekörpers 7 einhakbar sind. Während der Einsatz 63 beim Beispiel von Fig. 8 eine glattflächige Oberfläche für die Anlage an betreffenden Strangelementen aufweist, ist beim Beispiel von Fig. 9 eine Art Giebel 68 im mittleren Bereich ausgebildet. Die Oberfläche könnte auch mit einer andersartigen Konturierung versehen sein.

Für die Verbindung der Einrichtungen 3 mit der Trägerstruktur 5 sind am Haltekörper 17 beidseits des Aufnahmeraums 7 an der Außenseite vertiefte Bereiche gebildet, die jeweils einen Kanal 71 (siehe Fig. 5 und 6) bilden. Mit diesen Kanälen 71 ist der jeweilige Haltekörper 17 auf die Arme 11 der Trägerstruktur 5 aufschiebbar. In der aufgeschobenen Montagestellung ist der jeweilige Haltekörper 17 durch Eingriff der im Kanal 71 befindlichen Nase 15 in die am jeweiligen Arm 11 der Trägerstruktur 5 befindliche Vertiefung 13 festgelegt. Es versteht sich, dass für eine zusätzliche Sicherung ein Spannband (nicht gezeigt) vorgesehen sein könnte, das um die Oberseite der Abdeckeinrichtung 19 herumgelegt wäre. Alternativ oder zusätzlich können Bohrungen 73 im Haltekörper 17 zusätzliche Befestigungsmöglichkeiten bieten. Für die Führung von Strangelementen mit empfindlichen Oberflächen und/oder zum Ermöglichen von Relativbewegungen der Strangelemente kann die Unterseite 61 des Andrückteils 43 mit einer besonders glatten Oberfläche versehen sein. Auch kann die Unterseite 61 mit seitlichen Randwölbungen 75 versehen sein. Wie Fig. 4 beispielhaft zeigt, kann an der Unterseite 61 des Andrückteils 43 anstelle einer durchgehenden Anlagefläche auch eine Struktur mit Rippen 77 vorgesehen sein.

## Patentansprüche

1. Einrichtung zur Fixierung und/oder Führung von strangförmigen Elementen, insbesondere von Kabeln oder Kabelbündeln bei Windkraftanlagen, mit mindestens einem zur Bildung eines modularen Befestigungssystems mit einer Trägerstruktur (5) kombinierbaren Haltekörper (17), der einen Aufnahmeraum (7) bildet, der für das Einlegen mindestens eines Strangelements eine Öffnung (23) aufweist, die durch eine Abdeckeinrichtung (19) verschließbar ist, die ein Andrückteil (43) aufweist, mittels dessen in einem Spannbereich eine Haltekraft auf im Aufnahmeraum (7) befindliche Strangelemente ausübbar ist, wobei für eine Anpassung der Lage des Spannbereichs des Andrückteils (43) an unterschiedliche Abmessungen eingelegter Strangelemente eine Rasteinrichtung (37, 39) vorhanden ist, mittels deren die Abdeckeinrichtung (19) mit dem Haltekörper (17) wahlweise in Positionen verrastbar ist, die dem Zentralbereich des Aufnahmeraumes (7) mehr oder weniger stark angenähert sind, wobei der Haltekörper (17) einen Aufnahmeraum (7) in Form einer Mulde bildet, und wobei die Rasteinrichtung an den beiden einander zugewandten Innenseiten des Randes der Öffnung (23) der Mulde eine sich in Richtung der Tiefe der Mulde erstreckende Folge von Rastkerben (37) und an den dem Rand der Öffnung (23) zugekehrten Seiten der Abdeckeinrichtung (19) jeweils eine Rastnase (39) aufweist, **dadurch gekennzeichnet, dass** die Abdeckeinrichtung (19) am Haltekörper (17) für Schwenkbewegungen zwischen die Öffnung (23) freigebenden und die Öffnung (23) verschließenden Stellungen über eine Schwenklagerung (27, 33, 35) angebracht ist, die mittels Langlöchern (33) eine Verlagerung der Schwenkachse und damit einen Verschiebeweg für die Positionseinstellung der Abdeckeinrichtung (19) entlang der Folge der Rastkerben (37) der Rasteinrichtung zur Verfügung stellt.

2. Einrichtung nach Anspruch 1, **dadurch gekennzeichnet, dass** zur Bildung der Schwenklagerung an beiden Rändern der Öffnung (23) des Aufnahmeraums (7) vorstehende Ansätze (25) vorgesehen sind, an deren einander zugewandten Innenseite jeweils eine Folge der Rastkerben (37) ausgebildet ist.

3. Einrichtung nach Anspruch 1 oder 2, **dadurch gekennzeichnet, dass** die Abdeckeinrichtung (19) ein Oberteil (23) aufweist, an dem das Andrückteil (43) über den Spannbereich beweglich gelagert ist, das beidseits jeweils zwei vorspringende Lagerteile (31) aufweist, die die Ansätze (25) an der Öffnung (23) des Aufnahmeraums (7) übergreifen, und dass die Langlöcher (33) der Schwenklagerung in den Lagerteilen (31) gebildet sind.

4. Einrichtung nach einem der vorstehenden Ansprüche, **dadurch gekennzeichnet, dass** die an der Abdeckeinrichtung (19) befindlichen Rastnasen (39) der Rasteinrichtung an je einer flexiblen Zunge (42) gebildet sind, die am Oberteil (29) der Abdeckeinrichtung (19) zwischen den Lagerteilen (31) angeformt sind.

5. Einrichtung nach einem der vorstehenden Ansprüche, **dadurch gekennzeichnet, dass** an den der Schwenklagerung zugehörigen Ansätzen (25) des Haltekörpers (17) im Abstand von einer die Schwenkachse definierenden Bohrung (27) Auswölbungen (41) gebildet sind, die mit den Langlöchern (33) der Lagerteile (31) des Oberteils (29) der Abdeckeinrichtung (19) bei deren Offenstellung in Rasteingriff kommen.

6. Einrichtung nach einem der vorstehenden Ansprüche, **dadurch gekennzeichnet, dass** für eine Modifizierung oder Oberflächenbeschaffenheit der Aufnahmeräume (7) schalenförmige, die Wand des jeweiligen Aufnahmeraums (7) bildende Einsätze (63) vorgesehen sind, die auswechselbar im Haltekörper (17) festlegbar sind.

7. Einrichtung nach einem der vorstehenden Ansprüche, **dadurch gekennzeichnet, dass** der Haltekörper (17) beidseits des Aufnahmeraums (7) an seiner Außenseite vertiefte Bereiche aufweist, die je einen Kanal (71) bilden, mit dem der Haltekörper (17) auf Arme (11) aufschiebbar ist, die in Abständen voneinander an einer Trägerstruktur (5) angeordnet sind.

8. Einrichtung nach einem der vorstehenden Ansprüche, **dadurch gekennzeichnet, dass** zwischen den Kanälen (71) und den Armen (11) der Trägerstruktur (5) eine Verrastung (13, 15) zum Festlegen des auf die Arme (11) aufgeschobenen Haltekörpers (17) ausgebildet ist.

9. Einrichtung nach einem der vorstehenden Ansprüche, **dadurch gekennzeichnet, dass** das Andrückteil (43) der Abdeckeinrichtung (19) an dessen Oberteil (29) längs einer Führung (47, 51, 53, 55, 57) bewegbar ist, die die Länge des Spannbereichs des Andrückteils (43) begrenzt.

10. Einrichtung nach einem der vorstehenden Ansprüche, **dadurch gekennzeichnet, dass** das Andrückteil (43) durch eine Federanordnung (45) für eine vom Oberteil (29) weg gerichtete Bewegung vorgespannt ist.

11. Modulares Befestigungssystem, das zumindest eine Einrichtung (3) nach einem der Ansprüche 1 bis 10 aufweist, **dadurch gekennzeichnet, dass** eine Trägerstruktur (5) mit im Abstand voneinander verlaufenden Armen (11) vorgesehen ist, zwischen denen ein jeweiliger Haltekörper (17) aufnehmbar und mittels Festlegemitteln (13, 15) an der Trägerstruktur (5) fixierbar ist.

12. Befestigungssystem nach Anspruch 11, **dadurch gekennzeichnet, dass** die Trägerstruktur (5) in Form eines Sternkörpers ausgebildet ist, an dem von einem Zentralbereich (9) sich nach außen erstreckende Arme (11) vorgesehen sind.

13. Befestigungssystem nach Anspruch 11 oder 12, **dadurch gekennzeichnet, dass** die Arme (11) an ihrer einem benachbarten Arm (11) zugewandten Seite eine Vertiefung (13) für den Eingriff eines eine fixierende Verrastung bildenden Vorsprungs (15) des jeweiligen Haltekörpers (17) aufweisen.

## Claims

1. A device for fixing and/or guiding strand-shaped elements, in particular cables or cable harnesses in wind turbines, comprising at least one holding body (17) which can be combined with a support structure (5) in order to form a modular fastening system and which forms an accommodating area (7) which has an opening (23) for inserting at least one strand element, which opening (23) can be closed by means of a cover device (19) which has a contact pressure part (43) by means of which a holding force can be exerted on strand elements located in the accommodating area (7) in a clamping region, in order to match the position of the clamping region of the contact-pressure part (43) to different dimensions of inserted strand elements, a latching device (37, 39) being provided, by means of which the cover device (19) can be latched to the holding body (17) optionally in positions which have come more or less close to the central region of the accommodating area (7), the holding body (17) forming an accommodating area (7) in the form of a depression, and the latching device having on both of the insides of the edge of the opening (23) of the depression which face one another a series of latching recesses (37) extending in the direction of the depth of the depression and having on the sides of the cover device (19) that are turned towards the edge of the opening (23) a respective latching lug (39), **characterised in that** the cover device (19) is attached by means of a swivel bearing (27, 33, 35) to the holding body (17) for swivel movements between positions clearing the opening (23) and positions closing the opening (23), which swivel bearing makes available displacement of the swivel axis, and so a displacement path for setting the position of the cover device (19) along the series of latching recesses (37) of the latching device by means of slots.

2. The device according to Claim 1, **characterised in that** in order to form the swivel bearing on both edges of the opening (23) of the accommodating area (7), protruding shoulders (25) are provided on the insides of which, facing one another, a series of latching recesses (37) is respectively formed.

3. The device according to Claim 1 or 2, **characterised in that** the cover device (19) has an upper part (23) on which the contact-pressure part (43) is moveably mounted over the clamping region, which counterpressure part has two projecting bearing parts (31) on each of the two sides, which bearing parts overlap the shoulders (25) at the opening (23) of the accommodating area (7), and that the slots (33) of the swivel bearing are formed in the bearing parts (31).

4. The device according to any of the preceding claims, **characterised in that** the latching lugs (39) of the latching device located on the cover device (19) are formed in each case on a flexible tongue (42) which is moulded onto the upper part (29) of the cover device (19) between the bearing parts (31).

5. The device according to any of the preceding claims, **characterised in that** bulges (41) are formed a distance away from a borehole (27) that defines the swivel axis on the shoulders (25) of the holding body (17) that belong to the swivel bearing, which bulges come into latched engagement with the slots (33) of the bearing parts (31) of the upper part (29) of the cover device (19) when the latter is in the open position.

6. The device according to any of the preceding claims, **characterised in that** for modification of the surface properties of the accommodating areas (7), shell-shaped inserts (63) that form the wall of the respective accommodating area (7) are provided which can be fixed interchangeably in the holding body (17).

7. The device according to any of the preceding claims, **characterised in that** the holding body (17) has indented areas on its outside on both sides of the accommodating area (7), which areas each form a channel (71) with which the holding body (17) can be pushed onto arms (11) which are disposed, spaced apart from one another, on a support structure (5).

8. The device according to any of the preceding claims, **characterised in that** a latch mechanism (13, 15) is formed between the channels (71) and the arms (11) of the support structure (5) for the fixing of the holding body (17) which is pushed onto the arms (11).

9. The device according to any of the preceding claims, **characterised in that** the contact-pressure part (43) of the cover device (19) can be moved on its upper part (29) along a guide (47, 51, 53, 55, 57) which limits the length of the clamping region of the contact-pressure part (43).

10. The device according to any of the preceding claims, **characterised in that** the contact-pressure part (43) is pre-tensioned by a spring arrangement (45) for a movement directed away from the upper part (29).

11. A modular fastening system which comprises at least one device (3) according to any of Claims 1 to 10, **characterised in that** a support structure (5) is provided with arms (11) running a distance apart from one another, between which arms a respective holding body (17) can be accommodated and can be fixed to the support structure (5) by means of fixing means (13, 15).

12. The fastening system according to Claim 11, **characterised in that** the support structure (5) is made in the form of a star on which arms (11) extending outwards from a central region (9) are provided.

13. The fastening system according to Claim 11 or 12, **characterised in that** the arms (11) have an indentation (13) on their side facing an adjacent arm (11) for the engagement of a projection (15) of the respective holding body (17) that forms a fixing latch mechanism.

## Revendications

1. Dispositif d'immobilisation et/ou de guidage d'éléments en forme de corde, notamment de câbles ou de faisceaux de câbles dans des éoliennes, comprenant au moins un corps (17) de maintien pouvant être, pour la formation d'un système de fixation modulaire, combiné à une structure (5) porteuse formant un espace (7) de réception, qui a, pour l'insertion d'au moins un élément de corde, une ouverture (23) pouvant être formée par un dispositif (19) de couverture, qui a une partie (43) d'application d'une pression, au moyen duquel une force de maintien peut, dans une région de tension, être appliquée à des éléments de corde se trouvant dans l'espace (7) de réception, dans lequel, pour adapter la position de la région de tension de la partie (43) d'application d'une pression à des dimensions différentes d'éléments de corde insérés, il est prévu un dispositif (37, 39) d'encliquetage au moyen duquel le dispositif (19) de recouvrement peut être encliqueté avec le corps (17) de maintien au choix dans des positions, qui sont rapprochées plus ou moins fortement de la région centrale de l'espace (7) de réception, le corps (17) de maintien formant un espace (7) de réception sous la forme d'une auge et le dispositif d'encliquetage ayant, sur les deux côtés intérieurs tournés l'un vers l'autre du bord de l'ouverture (23) de l'auge, une succession s'étendant dans la direction de la profondeur de l'auge d'encoches (37) d'encliquetage et sur les côtés, tournés vers le bord de l'ouverture, du dispositif (19) d'encliquetage, respectivement un bec (39) d'encliquetage,
**caractérisé en ce que** le dispositif (19) de recouvrement est monté par un montage (27, 33, 35) à pivotement sur le corps (17) de maintien, pour des mouvements de pivotement, entre des positions dégageant l'ouverture (23) et fermant l'ouverture (23), montage qui, au moyen de boutonnières (33), met à disposition un déplacement de l'axe de pivotement et ainsi un déplacement pour la mise en position du dispositif (19) de recouvrement le long de la succession des encoches (37) d'encliquetage du dispositif d'encliquetage.

2. Dispositif suivant la revendication 1, **caractérisé en ce que**, pour former le montage de pivotement, il est prévu, sur les deux bords de l'ouverture (23) de l'espace (7) de réception, des bouts (25) en saillie sur les côtés intérieurs tournés l'un vers l'autre desquels est constituée respectivement une succession des encoches (37) d'encliquetage.

3. Dispositif suivant la revendication 1 ou 2, **caractérisé en ce que** le dispositif (19) de recouvrement a une partie (23) supérieure, sur laquelle est montée, mobile sur la région de tension, la partie (43) d'application d'une pression, qui a des deux côtés respectivement deux parties (31) de palier en saillie, qui chevauchent les bouts (25) à l'ouverture (23) de l'espace (7) de réception et **en ce que** les boutonnières (33) du montage de pivotement sont formées dans les parties (31) de palier.

4. Dispositif suivant l'une des revendications précédentes, **caractérisé en ce que** les becs (39) d'encliquetage, se trouvant sur le dispositif (19) de recouvrement du dispositif d'encliquetage, sont formés sur respectivement une languette (42) souple, qui sont formées à la partie supérieure du dispositif (19) de recouvrement entre les parties (31) de palier.

5. Dispositif suivant l'une des revendications précédentes, **caractérisé en ce que**, sur les bouts (25) appartenant au montage de pivotement du corps (17) de maintien, sont formées, à distance d'un trou (27) définissant l'axe de pivotement, des excroissances (41), qui peuvent venir en prise avec les boutonnières (33) des parties (31) de palier de la partie (29) supérieure du dispositif (19) de recouvrement en sa position d'ouverture.

6. Dispositif suivant l'une des revendications précédentes, **caractérisé en ce que**, pour modifier une propriété de surface de l'espace (7) de réception, il est prévu des inserts (63) en forme de coque, formant la paroi de l'espace (7) de réception, inserts qui peuvent être fixés de manière remplaçable dans le corps (17) de maintien.

7. Dispositif suivant l'une des revendications précédentes, **caractérisé en ce que** le corps (17) de maintien a, des deux côtés de l'espace (7) de réception, des régions évidées sur sa face extérieure, qui forment respectivement un canal, par lequel le corps (17) de maintien peut être déplacé sur des bras (11) montés à distance l'un de l'autre sur une structure (5) porteuse.

8. Dispositif suivant l'une des revendications précédentes, **caractérisé en ce qu'**entre les canaux (71) et les bras (11) de la structure (5) porteuse est constitué un encliquetage (13, 15) pour la fixation du corps (17) de maintien glissé sur les bras (11).

9. Dispositif suivant l'une des revendications précédentes, **caractérisé en ce que** la partie (43) d'application d'une pression du dispositif (19) de recouvrement peut être déplacée sur sa partie (29) supérieure, le long d'un guidage (47, 51, 53, 55, 57), qui délimite la longueur de la région de tension de la partie (43) d'application d'une pression.

10. Dispositif suivant l'une des revendications précédentes, **caractérisé en ce que** la partie (43) d'application d'une pression est précontrainte par un agencement (45) de ressort, pour un mouvement l'éloignant de la partie (29) supérieure.

11. Système de fixation modulaire, qui a au moins un dispositif (3) suivant l'une des revendications 1 à 10, **caractérisé en ce qu'**il est prévu une structure (5) porteuse, ayant des bras (11) s'étendant à distance les uns des autres et entre lesquels un corps (17) de maintien peut être reçu et immobilisé sur la structure (5) porteuse, à l'aide de moyens (13, 15) de fixation.

12. Système de fixation suivant la revendication 11, **caractérisé en ce que** la structure (5) porteuse est constituée sous la forme d'un corps en étoile, sur lequel sont prévus des bras (11) s'étendant d'une région (9) centrale vers l'extérieur.

13. Système de fixation suivant la revendication 11 ou 12, **caractérisé en ce que** les bras (11) ont, sur leur côté tourné vers un bras (11) voisin, une cavité (13) pour l'introduction d'une saillie (15), formant un encliquetage de fixation, du corps (17) de maintien respectif.
